# EUROPEAN PATENT SPECIFICATION

(11) **EP 4 502 264 B1**
(45) Date of publication and mention of the grant of the patent: **06.05.2026**
(21) Application number: 23781291.2
(22) Date of filing: 28.03.2023
(51) Int. Cl.: D06F 39/10, D06F 17/10, D06F 23/04, D06F 39/08, D06F 13/02

(54) **CLOTHES TREATMENT APPARATUS**
VORRICHTUNG ZUR BEHANDLUNG VON KLEIDUNGSSTÜCKEN
APPAREIL DE TRAITEMENT DE VÊTEMENTS

(30) Priority: 28.03.2022 KR 20220038304
(43) Date of publication of application: 05.02.2025
(73) Proprietor: LG Electronics Inc., Yeongdeungpo-gu Seoul 07336 (KR)
(72) Inventor: KIM, Dongcheol, Seoul 08592 (KR); KIM, Youngjong, Seoul 08592 (KR)
(74) Representative: Schornack, Oliver
(86) International application number: PCT/KR2023/004077
(87) International publication number: WO 2023/191436

(56) References cited:
- CN-U- 202 208 836
- KR-A- 20050 050 290
- KR-A- 20180 016 863
- US-A- 2 942 444
- US-A- 3 330 135
- US-A- 3 381 505
- US-A1- 2018 313 022
- US-A1- 2018 313 024

## Description

### [Technical Field]

The present invention relates to a laundry treatment apparatus for processing clothing accommodated in a rotatable drum.

### [Background Art]

A laundry treatment apparatus is an apparatus that removes contaminants from clothes, bedding, etc. (hereinafter referred to as laundry) put into a drum. The laundry treatment apparatus may perform operations such as washing, rinsing, dehydration, and drying. Laundry treatment apparatuses may be divided into top loading type apparatuses and front loading type apparatuses based on the method of loading the laundry into the drum.

A laundry treatment apparatus may include a housing defining an exterior, a tub accommodated in the housing, and a drum rotatably mounted inside the tub and configured to receive laundry introduced thereinto.

By rotating the drum with a motor or the like with washing water supplied to the laundry accommodated in the drum, dirt may be removed from the laundry by friction against the drum and the washing water.

In addition, a rotating part may be provided inside the drum to improve the washing effect of the laundry. The rotating part may be rotated inside the drum to form a water current, and the washing effect of the laundry may be improved by the rotating part.

On the other hand, foreign matter such as dust, lint, and contaminants from laundry may be present in the washing water during the laundry washing process. If these foreign matter are not properly removed, the cleanliness of the washing water may be excessively lowered and the washing efficiency may be lowered.

Among the related documents, US 11,008,695 B2 discloses a laundry washing machine including a filter configured to removing foreign matter from washing water. According to the document, in the laundry washing machine, the filter is included in the rotating part, and foreign matter in the washing water are captured and removed through the filter.

However, the filter in the related document filters the foreign matter by using the flow of washing water through a simple opening formed in the rotating part, and the filter surface on which the foreign matter are filtered has the same shape through the surface. Furthermore, the filter does not reflect the characteristics of the flow of washing water generated during the washing process, which is disadvantageous in terms of filtering efficiency.

Further, the filter is permanently coupled to at least a portion of the rotating part, by being integrated with the rotating part or a cap portion provided on the rotating part through fabrication, and thus the coupling structure is unfavorable for maintenance and replacement of either the rotating part or the filter.

Also the respective documents US 3 381 505 A, US 2 942 444 A, US 3 330 135 A and KR 2005 0050290 A disclose laundry treatment apparatuses including a filter disposed inside a column part protruding from a surface of a rotatable drum, whereby the filter comprises a filter body extending in parallel with the column part and comprises a filter surface facing an inner circumferential surface of the column part.

Therefore, it is an important task in the field of this technology to provide a filter in the rotating part, to improve the efficiency of removing foreign matter by the filter in consideration of the structural features of the rotating part and the characteristics of the flow of washing water, and to improve the maintainability of the filter through an efficient design of the filter.

### [Disclosure]

### [Technical Problem]

Embodiments of the present invention are directed to providing a laundry treatment apparatus capable of effectively filtering foreign matter from washing water using a rotating part.

Embodiments of the present invention are directed to providing a laundry treatment apparatus including a filter that is effectively fixed to a rotating part and is easily replaceable.

Embodiments of the present invention are directed to providing a laundry treatment apparatus including a filter provided in a rotating part and having a structure capable of effectively improving the performance of filtering foreign matter.

Embodiments of the present invention are directed to providing a laundry treatment apparatus including a filter provided in the rotating part and having a structure capable of effectively improving maintenance performance.

### [Technical Solution]

The present invention is defined by the appended claims. In particular, the invention relates to a laundry treatment apparatus, which includes a rotating part including a column part, and the rotating part has a filter mounted therein. The filter includes a filter body and a filter fixing part, the filter body including a filter surface through which foreign matter is filtered out from washing water.

The filter fixing part is coupled to an inner circumferential surface of the column part, whereby the filter may be effectively fixed inside the column part. Furthermore, the filter fixing part may be coupled to the inner circumferential surface of the column part in such a way that it is easy to remove, thereby enabling convenient maintenance, repair, and replacement of the filter.

According to the invention, the filter fixing part is spaced apart from the column cap, and thus the filter may be reliably fixed inside the column part regardless of whether the column cap and the column part are coupled.

Further, in one embodiment of the present invention, a blade extends obliquely. Accordingly, when the column part is rotated, the washing water forms a rising water current or a falling water current, and water flow holes in communication with the filter are arranged obliquely like the blade. Accordingly, water may effectively flow in and out of the filter according to the flow characteristics of the washing water.

A laundry treatment apparatus according to the present invention includes a cabinet, a tub, a drum, a column part, and a filter. The tub is arranged inside the cabinet, and water is accommodated therein.

The drum is rotatably disposed inside the tub, and accommodates clothing therein. The drum has a drum opening formed in one surface thereof to allow the clothing to be introduced therethrough. The column part protrudes from a surface of the drum opposite to the one surface toward the drum opening and has a space formed therein.

The filter is disposed inside the column part to filter out foreign matter from water flowing into the column part.

The filter includes a filter body and a filter fixing part. The filter body extends in parallel with the column part and includes a filter surface facing an inner circumferential surface of the column part. The filter fixing part is coupled to the inner circumferential surface of the column part to fix the filter body inside the column part.

The inner circumferential surface of the column part is provided with a filter coupling portion to which the filter fixing part is coupled. The filter fixing part may be fixed by being coupled to the filter coupling portion.

The column part includes a column body having a space formed therein, the column body including an opening surface facing the drum opening, and a column cap coupled to the column body to shield the open surface.

The filter coupling portion is spaced apart from the column cap and coupled to the filter fixing part.

The filter fixing part is disposed at an upper end of the filter body to face the column cap.

The column part may include a blade protruding from an outer circumferential surface of the column part to form a water current inside the drum, and a water flow hole extending from the outer circumferential surface of the column part to the inner circumferential surface of the column part in a penetrating manner to allow water to flow therethrough.

The blade may extend from one end of the column part to an opposite end of the column part. The water flow hole may include a plurality of water flow holes arranged along a direction of extension of the blade. The plurality of water flow holes may be disposed on opposite sides of the blade with respect to a circumferential direction of the column part, respectively.

The filter body may include a plurality of water inflow portions facing the water flow holes, and the filter surface may be disposed between the water inflow portions.

The blade may extend at an inclination with respect to a longitudinal direction of the column part, and the water flow holes may be arranged in parallel with the direction of extension of the blade. The water inflow portions may extend in parallel with a direction of arrangement of the water flow holes inside the column part to face the water flow holes.

Each of the water inflow portions may include an outer open portion open toward an outside of the filter body, the outer open portion having a first diameter, and an inner open portion connected to the outer open portion and open toward an inside of the filter body, the inner open portion having a second diameter smaller than the first diameter.

One end of the blade disposed at the one end of the column part may be spaced apart from an opposite end of the blade disposed at the opposite end of the column part in a first direction along a circumference of the column part, and the outer open portion may be spaced apart from the inner open portion in the first direction.

The filter body may include a filter case including the filter surface and having a space formed therein, the filter case defining an appearance of the filter body, and an inner filter disposed inside the filter case to filter out foreign matter from water flowing into the filter case.

The inner filter may include a plurality of inner filter surfaces spaced apart from each other along a longitudinal direction of the filter body to filter out foreign matter when water passes therethrough.

The one surface of the drum may correspond to a top surface of the drum, and an opposite surface of the drum may correspond to a bottom surface of the drum, The inner filter surfaces may have a conical shape having a diameter decreasing as the inner filter surfaces extend toward the opposite surface of the drum.

The filter surface may be provided with holes allowing water to pass therethrough. The cross-sectional area of the holes may be larger than the cross-sectional area of holes formed in the inner filter surfaces to allow water to pass therethrough.

The inner filter may further include an inner frame extending along a longitudinal direction of the filter case, and the inner filter surfaces may be fixed to inner frame. The inner filter may be arranged to be detachable from the filter case.

The filter case may have one open surface facing the drum opening, and the inner filter may be removably inserted into the filter case through the one open surface of the filter case.

The filter fixing part may be coupled to the filter case and disposed on the one open surface of the filter case. The inner frame may be provided with an inner support at one end facing the filter fixing part, the inner support contacting the filter fixing part. The filter fixing part may be coupled to the filter case to contact the inner support to fix the inner frame inside the filter case.

### [Advantageous Effects]

Embodiments of the present invention provide a laundry treatment apparatus capable of effectively filtering foreign matter from washing water using a rotating part.

Embodiments of the present invention provide a laundry treatment apparatus including a filter that is effectively fixed to a rotating part and is easily replaceable.

Embodiments of the present invention provide a laundry treatment apparatus including a filter provided in a rotating part and having a structure capable of effectively improving the performance of filtering foreign matter.

Embodiments of the present invention provide a laundry treatment apparatus including a filter provided in the rotating part and having a structure capable of effectively improving maintenance performance.

### [Description of Drawings]

FIG. 1 is a perspective view illustrating the appearance of a laundry treatment apparatus according to one embodiment of the present invention.
FIG. 2 is a cross-sectional view illustrating an interior of the laundry treatment apparatus according to one embodiment of the present invention.
FIG. 3 is a view illustrating a connection between a drive part and a rotation part in a laundry treatment apparatus according to one embodiment of the present invention.
FIG. 4 is a perspective view illustrating the appearance of a rotating part of a laundry treatment apparatus according to one embodiment of the present invention.
FIG. 5 is a view illustrating a direction in which a water current is formed according to rotation of a rotating part in one embodiment of the present invention.
FIG. 6 is a view illustrating a change in water level according to rotation of a rotating part in one embodiment of the present invention.
FIG. 7 is a cross-sectional view illustrating a filter including a water inlet extending in an inclined manner in one embodiment of the present invention.
FIG. 8 is a perspective view illustrating the appearance of the filter of FIG. 7.
FIG. 9 is a perspective view illustrating a filter fixing part coupled to a filter coupling portion in one embodiment of the present invention.
FIG. 10 is a view illustrating an outer open portion and an inner open portion of a filter including a water inflow portion extending at an inclination in one embodiment of the present invention.
FIG. 11 is a cross-sectional view illustrating a filter including an inner filter in one embodiment of the present invention.
FIG. 12 is a perspective view illustrating the appearance of the filter of FIG. 11.
FIG. 13 is a view illustrating an inner filter surface and an inner frame of an inner filter in one embodiment of the present invention.
FIG. 14 is an exploded perspective view of the filter of FIG. 11.
FIG. 15 is a perspective view illustrating an inner filter in one embodiment of the present invention.

### [Best Mode]

Hereinafter, embodiments of the present invention will be described in detail with reference to the accompanying drawings to provide a further understanding of the present invention to those of ordinary skill in the art

It will be apparent to those skilled in the art that the present invention can 1 be implemented in various different forms and is not limited to the embodiments described herein. In the drawings, parts irrelevant to the description are omitted in order to clearly describe the present invention. Wherever possible, the same reference numbers will be used throughout the specification to refer to the same or like parts.

In the present disclosure, redundant descriptions of the same component are omitted.

It should also be understood that when a component is described as being "connected" or "coupled" to another component, it may be directly connected or coupled to the other component, but there may be other components in between. On the other hand, when a component is described as being "directly connected" or "coupled" to another component, it should be understood that there is no other component between the connected or coupled components.

The terms used in this specification are merely used to describe particular embodiments and are not intended to limit the invention.

As used herein, the singular forms "a," "an," and "the" include plural referents unless context clearly dictates otherwise.

As used herein, the terms "includes" or "has" are intended to specify the presence of the features, numbers, steps, operations, components, parts, or combinations thereof disclosed in the specification, and are not to be understood as precluding the possibility of the presence or addition of one or more other features, numbers, steps, operations, components, parts, or combinations thereof.

As used herein, the term "and/or" includes a combination of a plurality of listed items or any of the plurality of listed items. As used herein "A or B" may include "A," "B," or "both A and B."

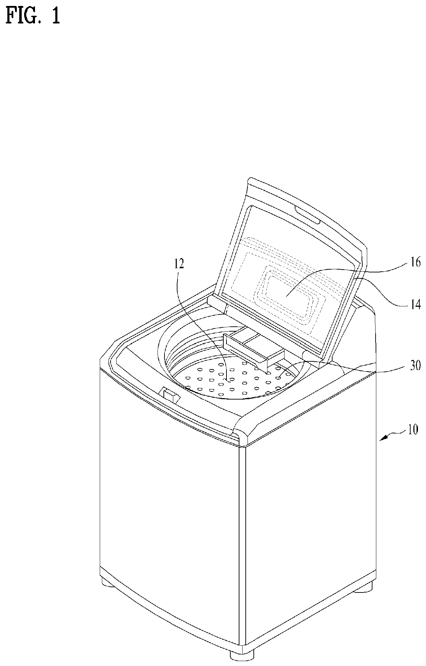

FIG. 1 illustrates the appearance of a laundry treatment apparatus 1 according to one embodiment of the present invention. Referring to FIG. 1, the laundry treatment apparatus 1 according to one embodiment of the present disclosure includes a cabinet 10.

The cabinet 10 has a space defined therein. A tub 20 and a drum 30 are disposed in the space. The cabinet 10 may have a roughly polyhedral shape, and FIG. 1 illustrates the cabinet 10 having a cuboidal shape according to one embodiment of the present disclosure.

The cabinet 10 may be formed by joining a plurality of plates. For example, the cabinet 10 may include a front plate, a back plate, side plates, a top plate, and a bottom plate.

The cabinet 10 may include a clothing opening 12. The clothing opening 12 may correspond to a hole through which the outside and inside of the cabinet 10 communicate with each other. A user may put clothing from the outside of the cabinet 10 into the cabinet 10 through the clothing opening 12.

The clothing opening 12 may be formed in the top plate. In other words, the laundry treatment apparatus 1 according to one embodiment of the present disclosure may be a top loading type apparatus in which a rotation shaft 71 of the drum 30 faces in a direction from the ground upward.

One embodiment of the present disclosure is not necessarily limited to the top loading type. Therefore, one embodiment of the present disclosure may be a front loading type. However, for convenience of explanation, the following description will be based on the top loading type as shown in FIG. 1.

The cabinet 10 may be provided with a clothing door 14. The clothing door 14 may be a means to open and close the clothing opening 12, and may be rotatably coupled to the cabinet 10. For example, the clothing door 14 may be rotatably coupled to the top plate of the cabinet 10 to open or close the clothing opening 12 in response to a state of rotation.

In addition, the cabinet 10 may be provided with a operation part 16 that is at least partially exposed to the outside. The operation part 16 may provide various information to the user, or receive command signals input by the user.

For example, the operation part 16 may include a display configured to provide visual information to the user, and a speaker configured to provide auditory information to the user, and may include various buttons that are operated by the user to generate command signals.

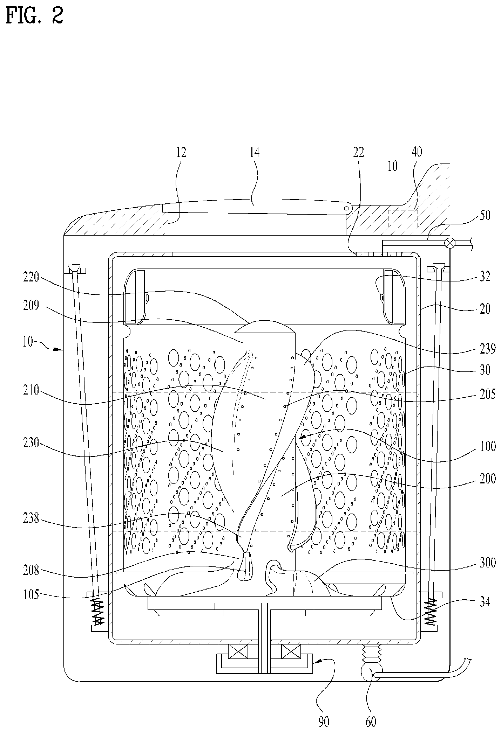

FIG. 2 illustrates an interior of the laundry treatment apparatus 1 according to one embodiment of the present invention.

Referring to FIG. 2, one embodiment of the present invention includes a drum 30 and a tub 20. The tub 20 is arranged inside the cabinet 10, and water may be accommodated therein. The water accommodated in the tub 20 may correspond to washing water.

The tub 20 may include a tub opening 22 that opens toward the clothing opening 12. In one embodiment of the present disclosure, the tub 20 may be formed in a cylindrical shape, with the tub opening 22 formed in a top surface thereof.

The drum 30 is arranged in the tub 20, and is rotatably mounted. The drum 30 has a space defined therein to accommodate clothing. The drum 30 has a drum opening 32 that opens toward the clothing opening 12 and the tub opening 22.

The drum 30 is provided with the drum opening 32 in one surface thereof, and an opposing surface 34 thereof positioned on an opposite side to the one surface may be connected to a drive part 70. For example, the drum 30 may be provided with the drum opening 32 in the top surface thereof, and the bottom surface thereof may be connected to the drive part 70 to receive rotational force. The drum opening 32 may be positioned to face the clothing opening 12 and the tub opening 22 such that clothing introduced from the outside of the cabinet 10 may be accommodated inside the drum 30 through the clothing opening 12, the tub opening 22, and the drum opening 32.

A plurality of holes may be formed in the perimeter surface of the drum 30. Accordingly, water accommodated in the tub 20 may flow into the drum 30 through the holes formed in the perimeter surface of the drum 30, and the clothing may be submerged in the water in the drum 30.

One embodiment of the present disclosure may include a water supply part 50 and a drainage part 60. The water supply part 50 may be connected to an external water source located outside of the cabinet 10 to receive water from the outside, and may deliver water from the external water source into the tub 20.

The drainage part 60 may be connected to the tub 20 to drain the water inside the tub 20 to the outside of the cabinet 10. The drainage part 60 may include a drain pump, and may drain the water inside the tub 20 to the outside of the cabinet 10 as the washing process ends.

One embodiment of the present disclosure may include a drive part 70. The drive part 70 may be provided inside the cabinet 10 and coupled to the drum 30. The drive part 70 may be disposed on the outside of the tub 20, for example, under the tub 20, and a drive shaft may extend through the tub 20 to be connected to the bottom surface of the drum 30.

One embodiment of the present disclosure may include a controller 34. The controller 34 may be in signal connection with the operation part 16, the water supply part 50, the drainage part 60, the drive part 70, and the like. The controller 34 may receive a user's command signal from the operation part 16 to perform a washing process, and may provide the user with status information about the washing process through the operation part 16.

The controller 34 may control a water supply valve of the water supply part 50 to regulate the flow of water supplied to the tub 20, and may control the drain pump of the drainage part 60 to regulate the flow of water discharged from the tub 20.

In one embodiment of the present disclosure, the rotating part 100 may be arranged inside the drum 30. The rotating part 100 may be rotatably installed inside the drum 30. The characteristics of rotation of the rotating part 100 may be adjusted to be the same as or different from the characteristics of rotation of the drum 30.

The rotating part 100 may include a column part 200 and a bottom portion 300. The bottom portion 300 may be located on an opposite surface 34 of the drum 30, such as the bottom surface of the drum 30, and may thus be disposed to cover at least a portion of the bottom surface of the drum 30. It may include a protrusion protruding into the drum 30 to create water current and increase the movement of the clothing.

The column part 200 may have a shape extending from the bottom portion 300 toward the drum opening 32 formed in one surface of the drum 30. The column part 200 may be integrated with or detachably mounting on the bottom portion 300. The column part 200 may extend inside the drum 30 in a direction parallel to the rotation shaft 71 of the drum 30 to create water current or increase the movement of the clothing when rotated.

The column part 200 may have a hollow shape with a space formed therein, and may have an open surface on one side facing the drum opening 32, such as an open top surface in a top loading type apparatus, and may include a column 220 coupled to the open top surface to shield the interior.

In other words, the column part 200 may have one end 208 connected to the bottom portion 300, and an opposite end 209 facing the drum opening 32, and the opening formed at the opposite end 209 may be shielded by the column cap 220. A drain hole may be formed in the one end 208 of the column part 200 to allow water present inside the column part 200 to be drained to the outside of the column part 200.

The outer circumferential surface 201 of the column part 200 may be provided with blades 230. The blades 230 may protrude from the column part 200 approximately in a radial direction of the drum 30, and may be integrated with the column part 200 or may be separately fabricated and coupled to the column part 200.

The number of blades 230 may vary. The column part 200 shown in FIG. 2 has three blades 230, but the blades do not need to be three.

The blades 230 may extend approximately along the longitudinal direction of the column 200. For example, one end 238 of the blade 230 may be disposed at the one end 208 of the column part 200, and an opposite end 239 of the blade 230 may be disposed at the opposite end 209 of the column part 200.

The blades 230 may extend from the one end 208 of the column part 200 to the opposite end 209 of the column part 200 in an inclined manner. For example, the direction of extension of the blades 230 may be inclined with respect to the longitudinal direction of the column part 200. Due to the inclined extension of the blades 230, a rising or falling water current may form in the water in the drum 30 upon rotation of the column part 200.

Next, water flow holes 205 may be formed in the outer circumferential surface 201 of the column part 200. The water flow holes 205 may allow the outside and inside of the column part 200 to communicate with each other. In other words, the water flow holes 205 may extend from the outer circumferential surface 201 to the inner circumferential surface 202 of the column part 200.

The water in the drum 30 may be provided into the column part 200 through the water flow holes 205. As will be described later, according to the present invention, a filter 400 is arranged inside the column part 200. Foreign matter such as dust, lint, and containments in the water introduced into the column part 200 through the water flow holes 205 may be filtered out by the filter 400.

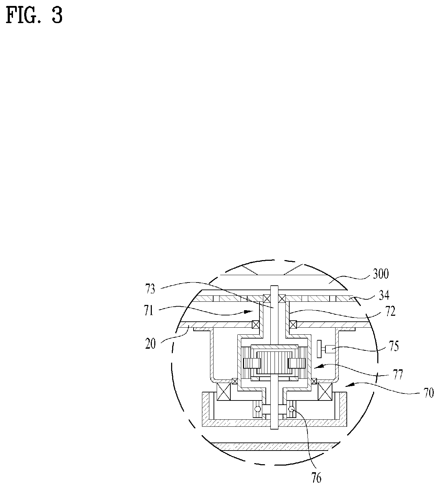

FIG. 3 shows the drive part 70 according to one embodiment of the present disclosure. Referring to FIG. 3, the drum 30 and the rotating part 100 may each be connected to the drive part 70 via the rotation shaft 71 to receive rotational force provided. In one embodiment of the present disclosure, the drum 30 may be rotated by a first rotation shaft 72 coupled to the bottom surface, and the rotating part 100 may be coupled to rotated by a second rotation shaft 73 extending through the bottom surface and rotated separately with respect to the first rotation shaft 72.

The second rotation shaft 73 may be rotated in the same direction as or an opposite direction to rotation of the first rotation shaft 72. The first shaft 72 and the second shaft 73 may be arranged to receive power through one drive part 70. The drive part 70 may be connected to a gear set 77 configured to distribut power to the first shaft 72 and the second shaft 73 and control the direction of rotation.

In other words, the drive shaft of the drive part 70 may be connected to the gear set 77 to transmit power to the gear set 77, and the first rotation shaft 72 and the second rotation shaft 73 may each be connected to the gear set 77 to receive power.

The first rotation shaft 72 may be arranged as a hollow shaft, and the second rotation shaft 73 may be arranged as a solid shaft inside the first rotation shaft 72. Accordingly, in the one embodiment of the present disclosure, power may be effectively provided to the first rotation shaft 72 and the second rotation shaft 73 arranged in parallel with each other, using one drive part 70.

FIG. 3 shows the gear set 77 of a planetary gear type with the drive shaft. The figure shows that first rotation shaft 72 and the second rotation shaft 73 are coupled to the gear set 77, respectively. A relationship between the first rotation shaft 72 and the second rotation shaft 73 in terms of rotation in one embodiment of the present disclosure is described below with reference to FIG. 3.

The drive shaft of the drive part 70 may be connected to a central sun gear in the planetary gear set 77. When the drive shaft is rotated, the gear set 77 may cause a satellite gear and a ring gear to rotate together by rotation of the sun gear.

The first shaft 72, which is coupled to the bottom surface of the drum 30, may be coupled to a ring gear disposed at the outermost edge of the gear set 77. The second rotation shaft 73, which is coupled to the rotating part 100, may be connected to a satellite gear disposed between the sun gear and the ring gear in the gear set 77.

The gear set 77 may include a first clutch element 75 and a second clutch element 76, which may limit rotation of each rotation shaft 71 as needed. The gear set 77 may further include a gear housing fixed to the tub 20. The first clutch element 75 may be arranged in the gear housing to selectively limit rotation of the first rotation shaft 72, which is connected to the ring gear.

The second clutch element 76 may be arranged to constrain or unconstrain the rotation of the drive shaft and the ring gear. In other words, the rotation of the ring gear or the rotation of the first shaft 72 may be synchronized or desynchronized with the drive shaft by the second clutch element 76.

In one embodiment of the present disclosure, when the first clutch element 75 and the second clutch element 76 are in the disengaged state, the first rotation shaft 72 and the second rotation shaft 73 rotate in opposite directions according to the rotation of the planetary gear. That is, the drum 30 and the rotating part 100 rotate in opposite directions.

When the first clutch element 75 is in a restriction state, the rotation of the ring gear and the first rotation shaft 72 is restricted, while the second rotation shaft 73 is rotated. In other words, the drum 30 is in a stationary state and only the rotating part 100 rotates. In this case, the direction of rotation of the rotating part 100 may be determined by the direction of rotation of the drive part 70.

When the second clutch element 76 is in a restriction state, the rotation of the drive shaft and the rotation of the first rotation shaft 72 are mutually constrained, and the rotations of the drive shaft, the first rotation shaft 72, and the second rotation shaft 73 may be constrained by the relationship with the planetary gear in terms of rotation. In other words, the drum 30 and the rotating part 100 rotate in the same direction.

When the first clutch element 75 and the second clutch element 76 are in the restriction state at the same time, the drive shaft, the first rotation shaft 72 and the second rotation shaft 73 are all in a stationary state. The controller 34 may appropriately control the drive shaft 70, the first clutch element 75, and the second clutch element 76 in the washing process, the rinsing process, and the like to implement a necessary operation state.

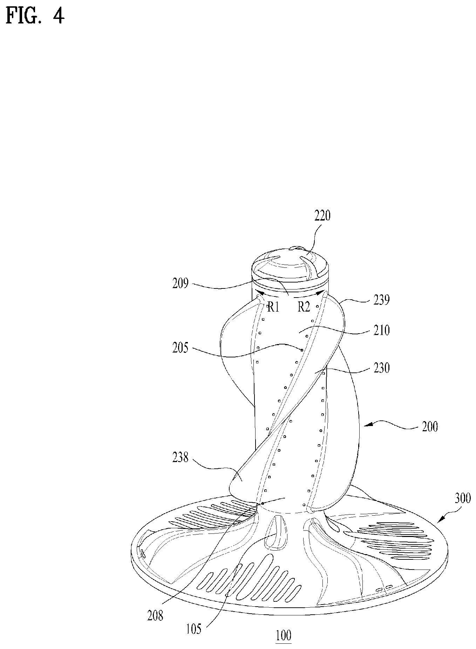

FIG. 4 illustrates the appearance of the rotating part 100 according to one embodiment of the present invention. Referring to FIG. 4, the rotating part 100 includes a bottom portion 300 and a column part 200.

As described above, the bottom portion 300 may be disposed on the bottom surface of the drum 30 and be rotated by the drive part 70. The bottom portion 300 may be provided with multiple protrusions that protrude toward the drum opening 32. The protrusions may extend approximately along a radial direction of the bottom portion 300.

The column part 200 may extend such that one end 208 thereof is connected to the bottom portion 300 and an opposite end 209 faces the drum opening 32. The column part 200 may be formed in a hollow shape, and the one end 208 may be provided with a drain hole 105 to allow water remaining inside the column part 200 to be discharged.

The outer circumferential surface 201 of the column part 200 may be provided with a blade 230 that extends at an inclination. One end 238 of the blade 230 may be disposed on the one end 208 of the column part 200 and an opposite end 239 of the blade 230 may be disposed on the opposite end 209 of the column part 200. The opposite end 209 of the column part 200 may be coupled to a column cap 220 arranged to shield one open surface of the column part 200.

Further, a water flow hole 205 may be formed to allow the inside and outside of the column part 200 to communicate with each other. The water flow hole 205 may be provided with a plurality of water flow holes arranged along the extension direction of the blade 230. Further, the water flow holes 205 may be arranged along the extension direction of the blade 230 on both sides of the blade 230.

For example, the water flow holes 205 may be disposed in a first direction R1 and a second direction R2 with respect to the blade 230, respectively, based on the circumferential direction of the column part 200.

During rotation of the column part 200, a rising water current and a falling water current may be formed by the inclined blade 230. For example, when the column part 200 is rotated in the first direction R1, a rising water current may be formed around the column part 200. When the column part 200 is rotated in the second direction R2, a falling water current may be formed.

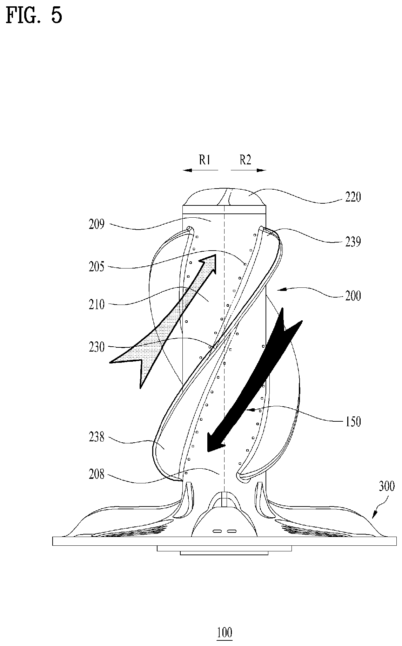

FIG. 5 illustrates a direction in which a water current is formed according to rotation of the rotating part 100 according to one embodiment of the present disclosure. Referring to FIG. 5, when the column part 200 rotates in the first direction R1, a rising water current may be formed. When the column part 200 rotates in the second direction R2, a falling water current may be formed.

The blades 230 may be disposed such that the one end 238 is spaced apart from the opposite end 239 in the first direction R1 with respect to the circumferential direction of the column part 200. Accordingly, when the column part 200 is rotated in the first direction R1, a rising water current may be formed by the inclination of the blades 230. Conversely, when the column part 200 is rotated in the second direction R2, a falling water current may be formed by the blades 230.

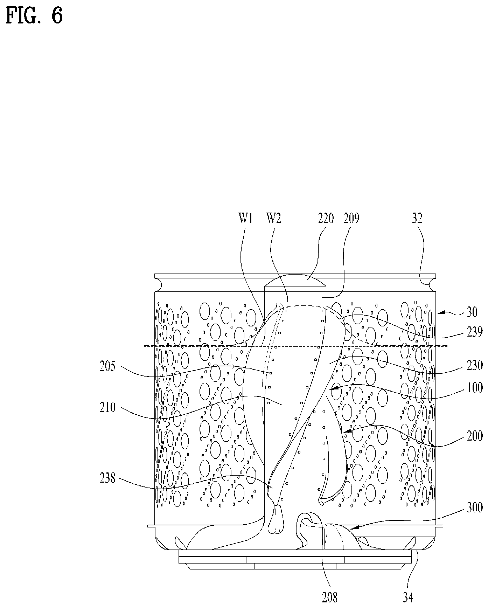

FIG. 6 conceptually illustrates rise of a water level around the column caused by rotation of the column part 200 in one embodiment of the present disclosure. Referring to FIG. 6, water may be provided in the drum 30 for a washing process or rinsing process of the clothing.

The water in the drum 30 is present as water supplied into the tub 20 is introduced into the drum 30 through holes in the perimeter surface of the drum 30.

When rotation of the rotor 100 is not present, the water level inside the tub 20 or drum 30 may be approximately parallel to the ground. The water level in this state may be defined as a base water level W1.

When the rotating part 100 is rotated in the first direction R1, the water around the rotating part 100 may form a rising water current that rises toward the drum opening 32 by the inclined blades 230 as described above, thereby causing the water level around the rotating part 100 to be higher than the base water level W1, as shown in FIG. 6. The water level in this state may be defined as a raised water level W2.

In one embodiment of the present disclosure, the water level inside the tub 20 or drum 30 may be raised by rotation of the rotating part 100 including the inclined blades 230, and the effect of this rising and falling water current may induce upward and downward movement of the clothing, thereby improving the washing efficiency of the clothing.

Further, as will be described later, for the column part 200 having a height greater than the base water level W1 with respect to the bottom portion 300, when the raised water level W2 is formed by the rising water current, the area of contact between the column part 200 and the water may be increased, thereby greatly improving filtering of the water.

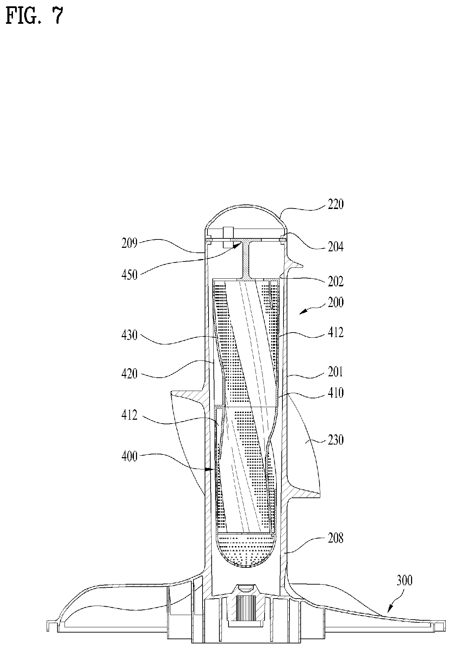

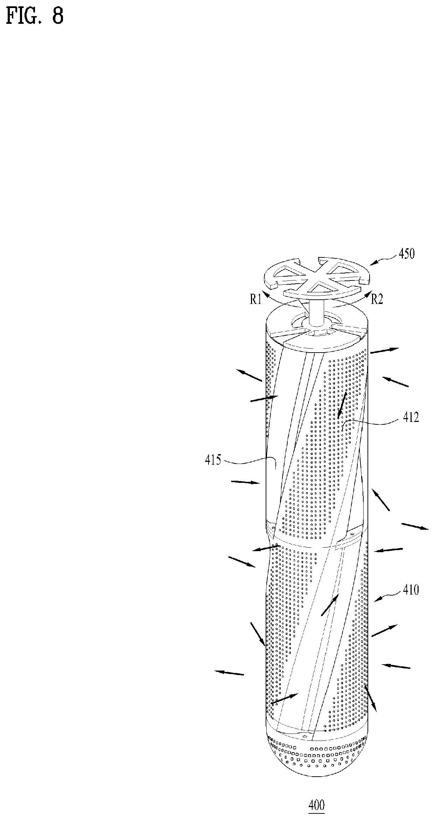

FIG. 7 illustrates a filter 400 present inside the column part 200 according to one embodiment of the present invention, and FIG. 8 illustrates the appearance of the filter 400 of FIG. 7.

Referring to FIGS. 7 and 8, according to the present invention, the column part 200 includes the filter 400.

Specifically, the laundry treatment apparatus 1 according to one embodiment of the present invention includes the cabinet 10, the tub 20, the drum 30, the column part 200, and the filter 400, as described above.

The tub 20 is arranged inside the cabinet 10, and water may be accommodated therein. The drum 30 is rotatably disposed inside the tub 20, accommodate clothing therein, and has a drum opening 32 formed in one surface to allow clothing to be loaded therethrough.

The column part 200 may be disposed on an opposite surface 34 of the drum 30 opposing the one surface, such as on a bottom surface of the drum 30, and protrudes toward the drum opening 32, with a space formed therein.

The filter 400 is provided in the column part 200, and may filter out foreign matter from water flowing into the column part 200.

The filter 400 includes a filter body 410 and a filter fixing part 450. The filter body 410 includes a filter surface 412 extending in parallel with the column part 200 and facing an inner circumferential surface 202 of the column part 200. The filter fixing part 450 may be coupled to the inner circumferential surface 202 of the column part 200 to fix the filter body 410 to the interior of the column part 200.

Specifically, the filter 400 has an internal space surrounded by the filter surface 412 and has a shape extending along the longitudinal direction of the column part 200. Foreign matter in the water flowing into the column part 200 through the water flow holes 205 may be filtered out by the filter surface 412 of the filter 400 while the water is passing through the filter surface 412.

In the column part 200, the filter 400 is surrounded by the inner circumferential surface 202 of the column part 200, and the filter surface 412 is disposed to face the inner circumferential surface 202 of the column part 200. Accordingly, water flowing into the column part 200 through the water flow holes 205 may pass through the filter surface 412.

The filter fixing part 450 may be connected to the filter body 410 and may be fixed to the interior of the column part 200. That is, the filter 400 may be fixed to the interior of the column part 200 by the filter fixing part 450.

The filter fixing part 450 is fixed to the interior of the column part 200 in various ways. For example, the filter fixing part 450 may be coupled to the interior of the column part 200 using various means such as threads, magnetic force, or a hook.

In one embodiment of the present disclosure, the column part 200 may have an opening formed in one surface thereof facing the drum opening 32 for insertion of the filter 400. The filter 400 may be inserted into the column part 200 through the opening.

During the washing or rinsing process, water may be present in the drum 30, and the filter 400 may float toward the drum opening 32 under the action of buoyancy. In one embodiment of the present disclosure, the filter fixing part 450 may be coupled and fixed to the interior of the column part 200 to effectively prevent the filter 400 from being separated from the column part 200.

Further, a user may be allowed to conveniently remove the filter coupling portion 204, which is detachably coupled to the filter fixing part 450, to easily maintain, repair, and replace the filter 400.

According to the present invention, the inner circumferential surface 202 of the column part 200 is provided with a filter coupling portion 204 to which the filter fixing part 450 is coupled, and the filter fixing part 450 may be coupled to and fixed by the filter coupling portion 204.

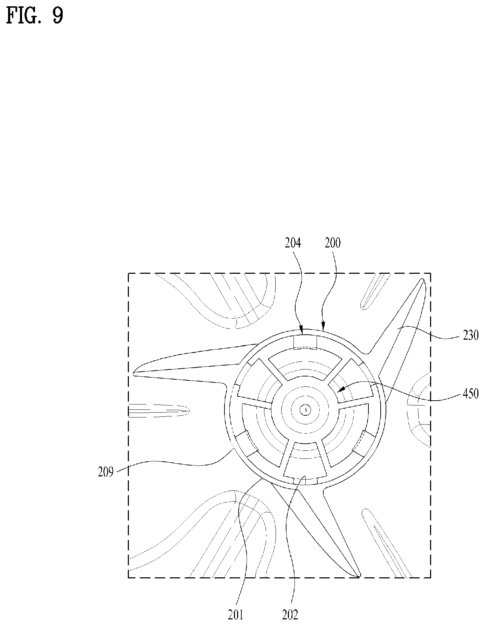

FIG. 9 illustrates the filter fixing part 450 of the filter 400 coupled to the filter coupling portion 204 of the column part 200 according to one embodiment of the present invention.

The filter coupling portion 204 is provided on the inner circumferential surface 202 of the column part 200. The filter coupling portion 204 may be integrated with the column part 200 or may be fabricated separately and coupled to the inner circumferential surface 202 of the column part 200. The filter coupling portion 204 shown in FIG. 9 is integrally formed on the inner circumferential surface 202 of the column part 200 according to one embodiment of the present disclosure.

The filter fixing part 450 and the filter coupling portion 204 may be coupled to each other in various ways. For example, the filter fixing part 450 may be coupled to the filter coupling portion 204 using various methods such as including screw coupling, magnetic coupling, and hook coupling.

Referring to FIG. 9, in one embodiment of the present disclosure, the filter coupling portion 204 may have a shape protruding from the inner circumferential surface 202 of the column part 200 toward the filter 400, and the filter fixing part 450 may include a groove through which the filter coupling portion 204 may pass with respect to the coupling direction of the filter 400.

The filter 400 may be inserted into the column part 200 with the groove of the filter fixing part 450 and the filter coupling portion 204 facing each other, and may be rotated along the perimeter of the column part 200 while arranged inserted into the column part 200 such that the groove of the filter fixing part 450 and the filter coupling portion 204 are spaced apart from each other, thereby preventing the filter from separating from the interior of the column part 200.

FIG. 9 illustrates the filter 400 inserted into the column part 200 and rotated such that the filter fixing part 450 is prevented by the filter coupling portion 204 from separating from the interior of the column part 200.

In one embodiment of the present invention, the column part 200 includes a column body 210 and a column cap 220. The column body 210 defines the appearance of the column part 200, has a space formed therein, and includes an open surface facing the drum opening 32.

The column cap 220 may be coupled to the column body 210 to shield the open surface. The filter coupling portion 204 is spaced apart from the column cap 220 such that the filter fixing part 450 may be fixed thereto. In other words, the filter coupling portion 204 is provided to the column body 210 rather than to the column cap 220 such that the filter 400 may be coupled thereto.

The column body 210 has a hollow shape and includes an open surface facing the drum opening 32. The column cap 220 may be coupled to the column body 210 to shield the open surface.

The column cap 220 may be threaded to be coupled to the column body 210. For example, a coupling portion may be formed at an end of the column body 210 facing the drum opening 32 so as to be coupled with the column cap 220. The column cap 220 may be detachably coupled to the column body 210.

The drum 30 and the rotating part 100 may be rotated by the drive part 70 operated by the controller 34. During the rotation of the rotating part 100, the coupling between the column cap 220 and the column body 210 may be unintentionally decoupled.

However, according to the present invention, the filter coupling portion 204 to which the filter 400 is coupled is provided on the column body 210 instead of the column cap 220, and therefore the filter 400 may effectively remain fixed to the interior of the column part 200 even in the event that the column cap 220 is decoupled.

Further, according to the present invention, the filter 400 may be handled separately from the column cap 220, which may improve ease of use for the user.

According to the present invention, the filter fixing part 450 is disposed at an upper end of the filter body 410 to face the column cap 220. That is, the upper end of the column part 200 may face the drum opening 32, and thus the column cap 220 may be disposed at the upper end of the column part 200. The filter fixing part 450 is disposed at an upper end of the filter 400 and thus be coupled to the filter coupling portion 204 of the column part 200.

As the filter fixing part 450 is disposed at the upper end of the filter body 410, the coupling and decoupling between the filter fixing part 450 and the filter coupling portion 204 be performed by a user with easy checking, and the filter coupling portion 204 may effectively fix the entire filter 400 such that the filter body 410 does not rise upward.

In one embodiment of the present disclosure, the column part 200 may include a blade 230 protruding from the outer circumferential surface 201 of the column part 200 to form a water current inside the drum 30, and water flow holes 205 extending from the outer circumferential surface 201 to the inner circumferential surface 202 of the column part 200 in a penetrating manner to allow water to flow therethrough.

As described above, the column part 200 may form a water current in the water in the drum 30 when rotated with the blade 230 on the outer circumferential surface 201 thereof, and water flow into and out of the column part 200 by the water flow holes 205 formed in the column part 200 in the washing process.

According to the present invention, as the filter 400 is provided inside the column part 200, the area of contact between the filter 400 and the water, that is, the filtering area, may be maximized, and the foreign matter in the water may be effectively removed, thereby enhancing the washing effect and improving the cleanliness of the water.

In one embodiment of the present disclosure, the blade 230 extends from the one end 208 to the opposite end 209 of the column part 200, and multiple water flow holes 205 may be provided and be arranged along the extension direction of the blade 230.

During rotation of the column part 200, the blade 230 may move water to form a water current, thereby increasing the water pressure around the blade 230 and increasing the amount of water flow.

Accordingly, in one embodiment of the present disclosure, by disposing the water flow holes 205 along the periphery of the blade 230 of the column part 200, the amount of water flowing in and out through the water flow holes 205 may be effectively increased, and the filtering effect may be improved.

In one embodiment of the present disclosure, the multiple water flow holes 205 may be disposed on both sides of the blade 230 with respect to the circumferential direction of the column part 200. For example, the water flow holes 205 may be disposed on a side of the blade 230 facing in the first direction R1 and a side of the blade 230 facing in the second direction R2, respectively. In other words, the water flow holes 205 may be located on one side and opposite side of the blade 230, respectively.

Accordingly, one embodiment of the present disclosure may effectively increase the amount of water flowing into the filter 400 and may improve the filtering effect in both a situation in which the rotating part 100 rotates in the first direction R1 and a situation in which the rotating part 100 rotates in the second direction R2.

Referring again to FIG. 8, in one embodiment of the present disclosure, the filter body 410 may include water inflow portions 415 facing the water flow holes 205, and the filter surface 412 may be disposed between the water inflow portions 415.

Specifically, in one embodiment of the present disclosure, the filter 400 may include the water inflow portion 415 through which water is guided to enter. Further, when the water inflow portion 415 is formed, the filter 400 may allow water to flow out through the filter surface 412.

As described above, the water flow holes 205, which correspond to passages through which water flows into the column part 200, may be disposed adjacent to the blade 230, and the water inflow portion 415 of the filter 400 may be disposed inside the column part 200 to face the water flow holes 205.

The water flow holes 205 disposed adjacent to the blade 230 may correspond to one of the portions where the hydraulic pressure and flow rate of water is locally high during rotation of the rotating part 100. Accordingly, in one embodiment of the present disclosure, the water inflow portion 415 may be disposed to face the water flow holes 205 to improve the fluidity of water flowing in and out of the filter 400.

Accordingly, water flowing into the column part 200 through the water flow holes 205 may flow into the filter 400 through the water inflow portion 415 of the filter 400, and water present in the filter 400 may flow out of the filter 400 by passing through the filter surface 412 again.

In FIG. 8, the flow of water guided in the filter 400 with the water inflow portion 415 formed according to one embodiment of the present disclosure is indicated by arrows. However, it is to be understood that the filter 400 does not necessarily include the water inflow portion 415, and that even if the filter includes the water inflow portion 415, the inflow of water does not necessarily occur through the water inflow portion 415 or the outflow of water does not necessarily occur through the filter surface 412.

In one embodiment of the present disclosure, the blade 230 may extend at an inclination with respect to the longitudinal direction of the column part 200. The direction of arrangement of the water flow holes 205 is parallel to the extension direction of the blade 230, and the water inflow portion 415 extends in parallel with the direction of arrangement of the water flow holes 205 so as to face the water flow holes 205 while being positioned inside the column part 200.

In other words, the water inflow portion 415 may be formed to extend in parallel with the extension direction of the blade 230 or the direction of arrangement of the water flow holes 205 to face the water flow holes 205 as a whole. Accordingly, in one embodiment of the present disclosure, the blades 230 may be arranged in an inclined shape to form a water current. Also, to improve the inflow and outflow of water, the water flow holes 205 may be arranged in parallel with the extension direction of the blades 230 and the water inflow portion 415 of the filter 400 may face the multiple water flow holes 205 as a whole. Thereby, fluidity of water may be improved.

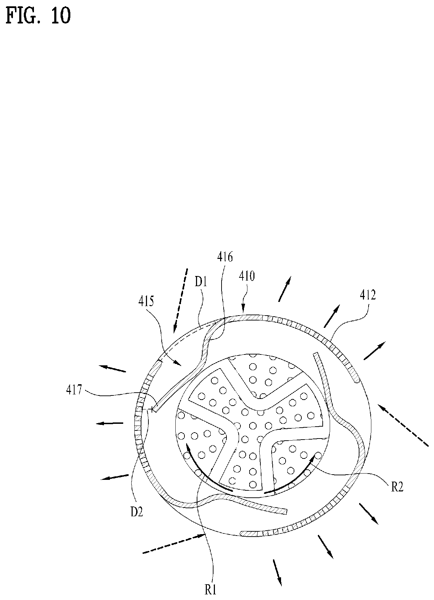

FIG. 10 illustrates a cross section of the filter 400 with the water inflow portion 415 formed thereon according to one embodiment of the present disclosure. Referring to FIG. 10, in one embodiment of the present disclosure, the water inflow portion 415 of the filter 400 may include an outer open portion 416 and an inner open portion 417.

The outer open portion 416 may be open to have a first diameter D1 toward the outside of the filter body 410. The inner open portion 417 may be connected to the outer open portion 416 and may open to have a second diameter D2 that is smaller than the first diameter D1 toward the inside of the filter body 410.

In other words, in one embodiment of the present disclosure, the water inflow portion 415 may be formed to be narrower on the inner side than on the outer side of the filter 400.

Specifically, the outer open portion 416 may correspond to an outer end of the water inflow portion 415 and may be located on the outer surface of the filter 400. The outer open portion 416 may correspond to an inlet through which water flowing into the column part 200 flows into the filter 400.

The inner open portion 417 may correspond to an inner end of the water inflow portion 415 and may be located on the inside of the filter 400. The inner open portion 417 may correspond to an end of a flow path leading into the column part 200.

The inner open portion 417 may have a smaller diameter or area than the outer open portion 416. Accordingly, water inside the column part 200 may easily flow into the filter 400 through the water inflow portion 415, and water or foreign matter inside the filter 400 may be inhibited from flowing out of the filter 400 through the water inflow portion 415.

In one embodiment of the present disclosure, the one end 238 of the blade 230 disposed at the one end 208 of the column part 200 is spaced apart from the opposite end 239 of the blade 230 disposed at the opposite end 209 of the column part 200 in the first direction R1 of the circumference of the column part 200, and the outer open portion 416 may be spaced apart from the inner open portion 417 in the first direction R1.

Specifically, in one embodiment of the present disclosure, the one end 238 of the blade 230 may be disposed shifted in the first direction R1 with respect to the opposite end 239 of the blade 230. In other words, in one embodiment of the present disclosure, when the column part 200 is rotated in the first direction R1, a rising water current may be formed in the drum 30.

Once the rising water current is formed, the amount of foreign matter suspended in the water may be increased, which may be advantageous for capturing the foreign matter, and the area of contact between the column part 200 and the water, that is, the filtering area, may be increased, which may be advantageous for capturing the foreign matter, as shown in FIG. 6.

Accordingly, in one embodiment of the present disclosure, in the filter 400, the outer open portion 416 of the water inflow portion 415 may be spaced apart from the inner open portion 417 in the first direction R1 to make the inflow of water effective according to the rising water current to maximize the filtering effect when a rising water current is formed.

In other words, in one embodiment of the present disclosure, the outer open portion 416 of the water inflow portion 415 may be arranged spaced apart from the inner open portion 417 in the first direction R1 such that water flowing in the second direction R2 with respect to the column part 200 is easily introduced when the column part 200 is rotated in the first direction R1 to generate a rising water current.

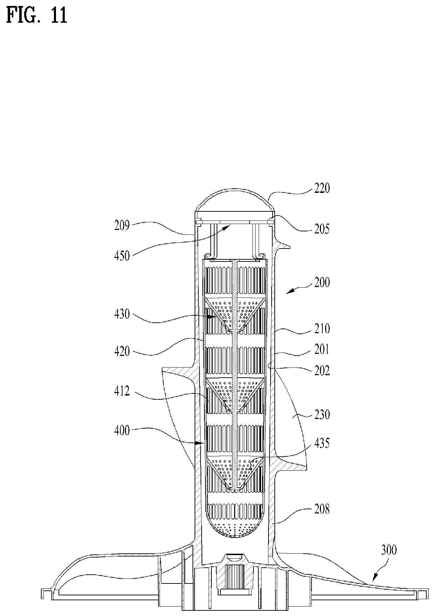

FIG. 11 illustrates an interior of the column part 200 in which a filter 400 including an inner filter 430 is mounted in one embodiment of the present disclosure. That is, in one embodiment of the present disclosure, the filter 400 may include an inner filter 430, and the inner filter 430 may secondarily filter out foreign matter in the filter 400.

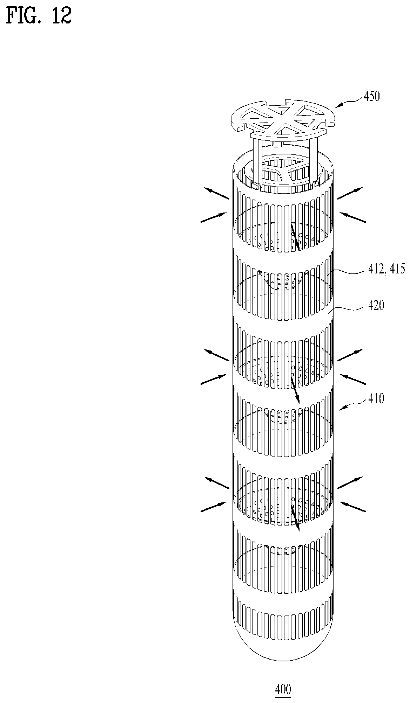

FIG. 12 illustrates the appearance of the filter 400 including the inner filter 430. For the filter 400 of FIG. 12, the water inflow portion 415 through which inflow of water is guided is omitted, and water may flow out and in simultaneously through the filter surface 412 defining the appearance of the filter 400.

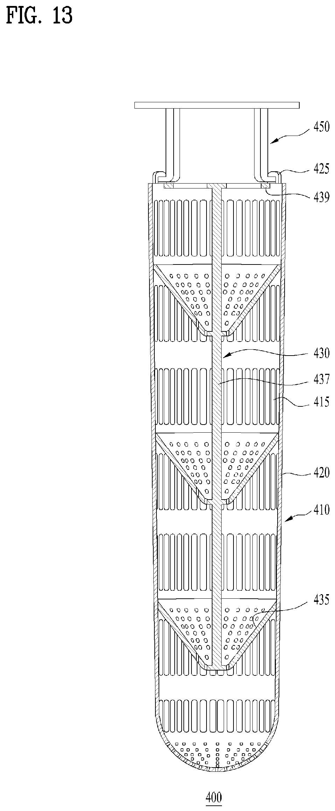

FIG. 13 illustrates a cross section of the inner filter 430. When the inner filter 430 is provided in the filter 400, the inner filter 430 may have a plurality of inner filter surfaces 435 connected by an inner frame 437, which will be described later, and the inner filter 430 may be fixed inside the filter 400.

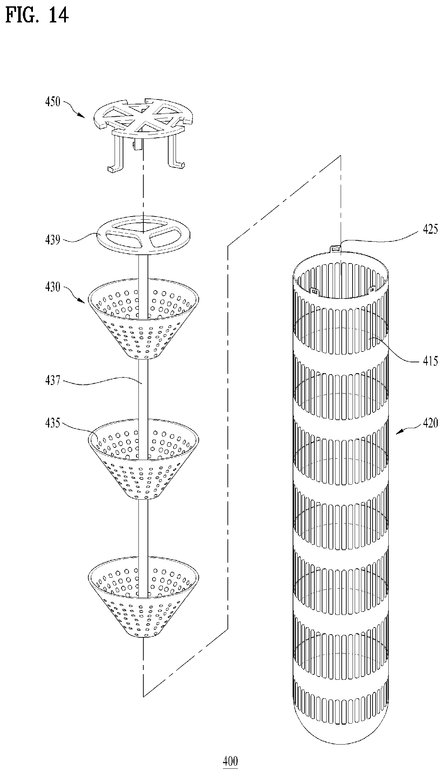

FIG. 14 is a disassembled view of the filter 400 including the inner filter 430, with the water inflow portion 415 omitted, according to one embodiment of the present disclosure.

Referring to FIG. 14, in one embodiment of the present disclosure, the filter body 410 may include a filter case 420 and the inner filter 430.

The filter case 420 may include the filter surface 412 described above and may have a space formed therein. It may define the appearance of the filter body 410. The inner filter 430 may be disposed inside the filter case 420 to filter out foreign matter from water flowing into the filter case 420.

In one embodiment of the present disclosure, as with the water inflow portion 415, the inner filter 430 may not be an essential part of the filter 400, and may be added to the interior of the filter case 420 as needed. The water inflow portion 415 described above may be formed in the filter case 420.

The filter case 420 may be provided with the filter surface 412 described above to filter out foreign matter from water flowing into the column part 200. The inner filter 430 inside the filter case 420 may also filter out foreign matter in the filter case 420.

In other words, one embodiment of the present disclosure may implement a dual filtering function of the filter 400 by employing the inner filter 430, which may effectively improve the cleanliness of the water and enable efficient filtering.

For example, as will be described later, the filter surface 412 of the filter case 420 may be configured to filter out relatively large-sized foreign matter, compared to the inner filter 430, and the inner filter 430 may filter out relatively small-sized foreign matter. Accordingly, the filtering efficiency and maintenance performance may be effectively improved.

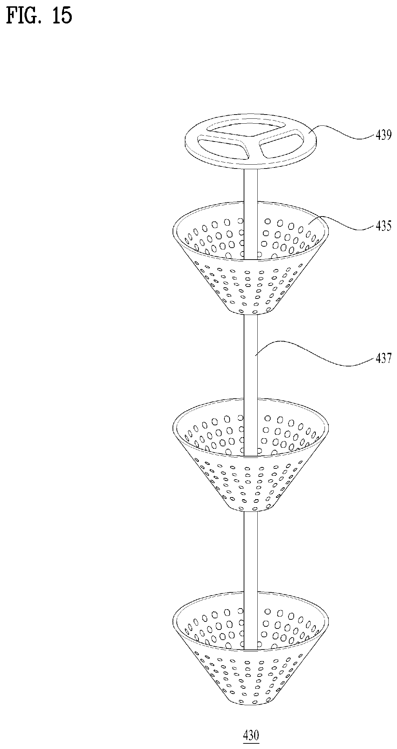

FIG. 15 illustrates the inner filter 430 according to one embodiment of the present disclosure. Referring to FIG. 15, in one embodiment of the present disclosure, the inner filter 430 may include inner filter surfaces 435.

Multiple inner filter surfaces 435 may be arranged spaced apart from each other and disposed along the longitudinal direction of the filter body 410 to filter out foreign matter as water passes therethrough. In other words, foreign matter may be primarily filtered out from water flowing into the column part 200 through the water flow holes 205 in the column part 200 while the water passes through the filter surface 412 formed in the filter case 420 of the filter 400. Foreign matter may be secondarily filtered out from the water flowing into the filter case 420 through the filter surface 412 while the water passes through the inner filter surfaces 435 of the inner filter 430.

The multiple inner filter surfaces 435 may be configured to filter out different sizes of foreign matter. For example, the multiple inner filter surfaces 435 may be spaced apart from each other along the longitudinal direction of the column part 200 or the filter case 420, and may have smaller or larger holes for water to pass through at positions closer to the one end 208 of the column part 200.

For example, in one embodiment of the present disclosure, the multiple inner filter surfaces 435 may have smaller holes as they are closer to the bottom surface of the drum 30. Accordingly, the inner filter 430 may be arranged such that the inner filter surfaces 435 closer to the bottom surface of the drum 30 may filter out finer foreign matter.

Within the column part 200 and the filter case 420, foreign matter may be gradually moved toward the bottom surface of the drum 30 by gravity. Thus, foreign matter that is not filtered out at the opposite end 209 of the column part 200 may gradually sink toward the one end 208 of the column part 200.

Accordingly, in one embodiment of the present disclosure, the inner filter surfaces 435 may be arranged from the opposite end 209 of the column part 200, such as the upper end, to the lower end of the column part 200 to gradually filter out finer foreign matter.

However, in one embodiment of the present disclosure, the sizes of the holes in the respective inner filter surfaces 435 do not necessarily need to have the above relationship. The holes may be designed such that they all have the same size, or the size of the holes decreases with distance from the one end 208 of the column part 200, as needed.

In one embodiment of the present disclosure, the one surface of the drum 30 described above may correspond to the top surface of the drum 30, and the opposite surface 34 may correspond to the bottom surface of the drum 30. In other words, the drum opening 32 may be formed in the top surface of the drum 30, and the column part 200 may be disposed on the bottom surface of the drum 30.

The inner filter surfaces 435 may have a conical shape with a decreasing diameter as they extend toward the bottom surface of the drum 30. While the inner filter surface 435 is illustrated in FIG. 15 as having a circular cross section, it is not necessarily limited to the circular shape.

In one embodiment of the present disclosure, as the inner filter surfaces 435 have a conical shape facing the bottom surface of the drum 30, foreign matter that sinks toward the bottom surface of the drum 30 in the column part 200 and the filter 400 due to gravity may be easily captured in the space defined by the inner filter surfaces 435.

In one embodiment of the present disclosure, the cross-sectional area of the holes formed in the filter surface 412 to allow water to pass therethrough may be larger than the cross-sectional area of the holes formed in the inner filter surface 435 to allow water to pass therethrough.

FIG. 14 illustrates holes in the filter surface 412 formed in the filter case 420 and holes in the inner filter surfaces 435. In one embodiment of the present disclosure, the holes in the filter surface 412 may be larger than the holes in the inner filter surfaces 435. Thus, relatively large-sized foreign matter may be filtered out by the filter surface 412 of the filter case 420, and relatively small-sized foreign matter may be filtered out by the inner filter surfaces 435 of the inner filter 430.

Accordingly, in one embodiment of the present disclosure, foreign matter of a certain size or larger may be primarily filtered out through the filter surface 412 of the filter case 420, and foreign matter which is small enough to pass through the holes in the filter surface 412 may be secondarily filtered out through the inner filter surfaces 435. Thereby, foreign matter may be effectively removed.

In one embodiment of the present disclosure, the inner filter 430 may further include an inner frame 437. The inner frame 437 may extend along the longitudinal direction of the filter case 420 such that the multiple inner filter surfaces 435 are fixed thereto.

FIGS. 13 to 15 illustrate the inner frame 437 to which the inner filter surfaces 435 are fixed, according to one embodiment of the present disclosure. The inner frame 437 may be integrated with the inner filter surfaces 435, or may be fabricated separately and coupled thereto.

The inner frame 437 may have the shape of a rod or column extending along the longitudinal direction of the filter case 420 or column part 200. The inner frame 437 may be coupled to an outer side of the inner filter surfaces 435 or may be arranged to extend through the inner filter surfaces 435.

FIGS. 13 to 15 shows an inner filter 430 having multiple inner filter surfaces 435 having a conical shape and including the inner frame 437 arranged to extend through the centers of the inner filter surfaces 435, according to one embodiment of the present disclosure.

In one embodiment of the present disclosure, the multiple inner filter surfaces 435 may effectively increase the filtering area of water. Also, efficient filtering may be achieved by varying the filtering size of each of the inner filter surfaces 435. Further, the rod-shaped inner frame 437 may allow the multiple inner filter surfaces 435 to be handled as a unit. Thereby, the inner filter 430 may be handled conveniently while minimizing obstruction of water flow.

Referring again to FIG. 14, in one embodiment of the present disclosure, the inner filter 430 may be arranged to be detachable from the filter case 420. That is, the user is allowed to remove the inner filter 430 from the filter case 420 for discharge of foreign matter inside the filter case 420 or for maintenance of the inner filter 430.

One surface of the filter case 420 facing the drum opening 32 is open, and the inner filter 430 may be inserted into the filter case 420 through the one open surface of the filter case 420.

The one surface of the filter case 420 facing the drum opening 32 may be entirely open, or may have an open hole formed in a portion thereof. The inner filter 430 may be inserted into the filter case 420 through the one open surface of the filter case 420 and installed along the longitudinal direction of the filter case 420.

In one embodiment of the present disclosure, as the inner filter 430 is inserted into the filter case 420 through the one open surface facing the drum opening 32, a user may be allowed to conveniently access the one open surface of the filter case 420 through the drum opening 32, and insertion and removal of the inner filter 430 may be facilitated.

In one embodiment of the present disclosure, the filter fixing part 450 may be coupled to the filter case 420 and disposed on the one open surface of the filter case 420. In other words, the filter fixing part 450 may be coupled to the filter case 420 to prevent the inner filter 430 from being separated and may be coupled and fixed to the inner circumferential surface 202 of the column part 200.

FIG. 14 illustrates the filter fixing part 450 decoupled from the filter case 420, while FIG. 13 illustrates the filter fixing part 450 coupled to the filter case 420.

The sequence of coupling and decoupling the filter 400 including the inner filter 430 according to the present disclosure is described below.

First, the filter case 420 may have a space formed therein and include an one open surface . The inner filter 430 may be inserted into the filter case 420 through the one open surface of the filter case 420.

After the inner filter 430 is mounted, the filter fixing part 450 may be coupled to the filter case 420. By coupling the filter fixing part 450 to the filter case 420, the inner filter 430 may be fixed inside the filter case 420.

To remove the filter 400, the user may decouple the filter fixing part 450 from the filter case 420. The filter fixing part 450 may be coupled to the filter case 420 using various methods, such as hook coupling, screw coupling, or magnetic coupling, and the user may conveniently remove the filter fixing part 450 from the filter case 420 as needed. Once the filter fixing part 450 is decoupled from the filter 400, the inner filter 430 may be removed from the interior of the filter case 420.

In one embodiment of the present disclosure, the inner frame 437 is provided with an inner support 439 contacting the filter fixing part 450 at one end facing the filter fixing part 450, and the filter fixing part 450 may be coupled to the filter case 420 to contact the inner support 439 to fix the inner frame 437 inside the filter case 420.

Specifically, the inner frame 437 may be coupled to multiple inner filter surfaces 435 and may be provided with an inner support 439 at one end, such as an upper end, facing the filter fixing part 450. The inner support 439 may contact the filter fixing part 450 so as not to be separated from the filter case 420.

The inner support 439 may have various shapes. While the inner support 439 is illustrated in FIGS. 12 to 15 as having a substantially circular cross-sectional shape, it is not necessarily limited thereto and may any shape that facilitates contact with the fixing part.

The filter fixing part 450 may be arranged to partially contact the inner support 439 when coupled to the coupling case. The inner support 439 may be effectively prevented from separating from the inside of the filter case 420, such as floating out from the inside of the filter case 420, by contact with or pressure from the filter fixing part 450.

The filter fixing part 450 may contact the inner support 439 in various ways. FIGS. 12 and 13 show the filter fixing part 450 including coupling legs for coupling to the filter case 420, according to one embodiment of the present disclosure.

The filter case 420 may be provided with a case coupling portion 425 to which the coupling legs are coupled by, for example, insertion. The coupling legs may contact the inner support 439 on the upper side of the inner support 439 disposed inside the filter case 420.

While the present invention has been shown and described with reference to specific embodiments, it will be apparent to those of ordinary skill in the art that various modifications and variations can be made to the present invention without departing from the scope of the invention, which is defined in the appended claims.

## Claims

1. A laundry treatment apparatus (1) comprising:
a cabinet (10);
a tub (20) arranged inside the cabinet to accommodate water;
a drum (30) rotatably disposed inside the tub to accommodate clothing, the drum having a drum opening (32) formed in one surface thereof to allow the clothing to be introduced therethrough;
a column part (200) protruding from a surface of the drum (30) opposite to the one surface toward the drum opening (32), the column part (200) having a space formed therein; and
a filter (400) disposed inside the column part (200) to filter out foreign matter from water flowing into the column part,
wherein the column part (200) comprises:
a column body (210) having a space formed therein, the column body (210) comprising an opening surface facing the drum opening (32);
a column cap (220) coupled to the column body (210) to shield the open surface; and
a filter coupling portion (204) provided on an inner circumferential surface (202) of the column part (200) and spaced apart from the column cap (220) along a longitudinal direction of the column body (210), and
wherein the filter (400) comprises:
a filter body (410) extending in parallel with the column part (200), the filter body (410) comprising a filter surface (412) facing the inner circumferential surface (202) of the column part (200); and
a filter fixing part (450) disposed at an upper end of the filter body (410) and coupled to the filter coupling portion (204) to fix the filter body (410) inside the column part (200).

2. The laundry treatment apparatus of claim 1, wherein the upper end of the filter body (410) faces the column cap (220), so that the filter fixing part (450) faces the column cap (220).

3. The laundry treatment apparatus of claim 1, wherein the column part (200) comprises:
a blade (230) protruding from an outer circumferential surface (201) of the column part to form a water current inside the drum (30); and
a water flow hole (205) extending from the outer circumferential surface (201) of the column part to the inner circumferential surface (202) of the column part in a penetrating manner to allow water to flow therethrough.

4. The laundry treatment apparatus of claim 3, wherein the blade (230) extends from one end (208) of the column part (200) toward an opposite end (209) of the column part,
wherein the water flow hole comprises a plurality of water flow holes (205) arranged along a direction of extension of the blade (230).

5. The laundry treatment apparatus of claim 4, wherein the plurality of water flow holes (205) are disposed on opposite sides of the blade (230) with respect to a circumferential direction of the column part (200), respectively.

6. The laundry treatment apparatus of claim 4, wherein the filter body (410) comprises:
a plurality of water inflow portions (415) arranged inside the column part (200) to face the water flow holes (205),
wherein the filter surface (412) is disposed between the water inflow portions (415).

7. The laundry treatment apparatus of claim 6, wherein the blade (230) extends at an inclination with respect to a longitudinal direction of the column part (200),
wherein at least some of the water flow holes (205) are arranged in parallel with the direction of extension of the blade (230),
wherein the water inflow portions (415) extend in parallel with a direction of arrangement of the water flow holes (205) inside the column part to face the water flow holes (205).

8. The laundry treatment apparatus of claim 7, wherein each of the water inflow portions (415) comprises:
an outer open portion (416) which is a part of the water inflow portion and is open toward an outside of the filter body (410), the outer open portion (416) having a first diameter (D1); and
an inner open portion (417) formed integrally with and connected to the outer open portion (416) and is open toward an inside of the filter body (410), the inner open portion (417) having a second diameter (D2) smaller than the first diameter (D1).

9. The laundry treatment apparatus of claim 8, wherein one end (238) of the blade (230) disposed at the one end (208) of the column part (200) is spaced apart from an opposite end (239) of the blade (230) disposed at the opposite (209) end of the column part (200) in a first direction along a circumference of the column part (200),
wherein the outer open portion (416) is spaced apart from the inner open portion (417) in the first direction.

10. The laundry treatment apparatus of claim 1, wherein the filter body (410) comprises:
a filter case (420) comprising the filter surface (412) and having a space formed therein, the filter case (420) defining an appearance of the filter body (410); and
an inner filter (430) disposed inside the filter case (420) to filter out foreign matter from water flowing into the filter case (420).

11. The laundry treatment apparatus of claim 10, wherein the inner filter (430) comprises:
a plurality of inner filter surfaces (435) spaced apart from each other along a longitudinal direction of the filter body (410) to filter out foreign matter when water passes therethrough.

12. The laundry treatment apparatus of claim 11, wherein the one surface of the drum (30) corresponds to a top surface of the drum (30), and the opposite surface of the drum (30) corresponds to a bottom surface of the drum (30),
wherein the inner filter surfaces (435) have a conical shape having a diameter decreasing as the inner filter surfaces (435) extend toward the opposite surface of the drum (30).

13. The laundry treatment apparatus of claim 11, wherein the filter surface (412) is provided with holes allowing water to pass therethrough, the holes being larger than holes formed in the inner filter surfaces (435) to allow water to pass therethrough.

14. The laundry treatment apparatus of claim 11, wherein the inner filter (430) further comprises:
an inner frame (437) extending along a longitudinal direction of the filter case (420),
wherein the inner filter surfaces (435) are spaced apart from each other and fixed to inner frame (437).

15. The laundry treatment apparatus of claim 14, wherein the inner filter (437) is arranged to be detachable from the filter case (420).

16. The laundry treatment apparatus of claim 14, wherein the filter case (420) has one open surface facing the drum opening (32),
wherein the inner filter (430) is removably inserted into the filter case (420) through the one open surface of the filter case (420).

17. The laundry treatment apparatus of claim 16, wherein the filter fixing part (450) is coupled to the filter case (420) and disposed on the one open surface of the filter case (4020).

18. The laundry treatment apparatus of claim 17, wherein the inner frame (437) is provided with an inner support (439) at one end facing the filter fixing part (450), the inner support (439) contacting the filter fixing part (450),
wherein the filter fixing part (450) is coupled to the filter case (420) to contact the inner support (439) to fix the inner frame (437) inside the filter case (420).

## Patentansprüche

1. Wäschebehandlungsvorrichtung (1), umfassend:
ein Gehäuse (10);
eine Wanne (20), die innerhalb des Gehäuses angeordnet ist, um Wasser aufzunehmen;
eine Trommel (30), die drehbar innerhalb der Wanne angeordnet ist, um Kleidung aufzunehmen, wobei die Trommel eine Trommelöffnung (32) aufweist, die in einer Oberfläche derselben ausgebildet ist, um das Einführen der Kleidung durch diese hindurch zu ermöglichen;
ein Säulenteil (200), das von einer Oberfläche der Trommel (30) gegenüber der einen Oberfläche in Richtung der Trommelöffnung (32) vorsteht, wobei das Säulenteil (200) einen darin ausgebildeten Raum aufweist; und
einen Filter (400), der innerhalb des Säulenteils (200) angeordnet ist, um Fremdkörper aus dem in das Säulenteil fließendes Wasser herauszufiltern,
wobei das Säulenteil (200) umfasst:
einen Säulenkörper (210) mit einem darin ausgebildeten Raum, wobei der Säulenkörper (210) eine der Trommelöffnung (32) zugewandte Öffnungsfläche umfasst;
eine Säulenkappe (220), die mit dem Säulenkörper (210) verbunden ist, um die Öffnungsfläche abzuschirmen; und
einen Filterkupplungsabschnitt (204), der an einer Innenumfangsfläche (202) des Säulenteils (200) vorgesehen ist und entlang einer Längsrichtung des Säulenkörpers (210) von der Säulenkappe (220) beabstandet ist, und
wobei der Filter (400) umfasst:
einen Filterkörper (410), der sich parallel zu dem Säulenteil (200) erstreckt, wobei der Filterkörper (410) eine Filterfläche (412) umfasst, die der Innenumfangsfläche (202) des Säulenteils (200) zugewandt ist; und
ein Filterbefestigungsteil (450), das an einem oberen Ende des Filterkörpers (410) angeordnet und mit dem Filterkupplungsabschnitt (204) verbunden ist, um den Filterkörper (410) innerhalb des Säulenteils (200) zu befestigen.

2. Wäschebehandlungsvorrichtung nach Anspruch 1, wobei das obere Ende des Filterkörpers (410) der Säulenkappe (220) zugewandt ist, so dass das Filterbefestigungsteil (450) der Säulenkappe (220) zugewandt ist.

3. Wäschebehandlungsvorrichtung nach Anspruch 1, wobei das Säulenteil (200) umfasst:
ein Blatt (230), das aus einer Außenumfangsfläche (201) des Säulenteils herausragt, um einen Wasserstrom innerhalb der Trommel (30) zu bilden; und
eine Wasserströmungsöffnung (205), die sich von der Außenumfangsfläche (201) des Säulenteils zur Innenumfangsfläche (202) des Säulenteils durchdringend erstreckt, damit Wasser hindurchfließen kann.

4. Wäschebehandlungsvorrichtung nach Anspruch 3, wobei sich das Blatt (230) von einem Ende (208) des Säulenteils (200) zu einem gegenüberliegenden Ende (209) des Säulenteils erstreckt,
wobei die Wasserströmungsöffnung eine Mehrzahl von Wasserströmungsöffnungen (205) umfasst, die entlang einer Ausdehnungsrichtung des Blatt (230) angeordnet sind.

5. Wäschebehandlungsvorrichtung nach Anspruch 4, wobei die Mehrzahl von Wasserströmungsöffnungen (205) jeweils auf gegenüberliegenden Seiten des Blatts (230) in Bezug auf eine Umfangsrichtung des Säulenteils (200) angeordnet sind.

6. Wäschebehandlungsvorrichtung nach Anspruch 4, wobei der Filterkörper (410) umfasst:
eine Mehrzahl von Wasserzulaufabschnitten (415), die innerhalb des Säulenteils (200) so angeordnet sind, dass sie den Wasserströmungsöffnungen (205) zugewandt sind,
wobei die Filterfläche (412) zwischen den Wasserzulaufabschnitten (415) angeordnet ist.

7. Wäschebehandlungsvorrichtung nach Anspruch 6, wobei sich das Blatt (230) in Bezug auf eine Längsrichtung des Säulenteils (200) geneigt erstreckt,
wobei mindestens einige der Wasserströmungsöffnungen (205) parallel zur Ausdehnungsrichtung des Blatts (230) angeordnet sind,
wobei sich die Wasserzulaufabschnitte (415) parallel zu einer Anordnungsrichtung der Wasserströmungsöffnungen (205) innerhalb des Säulenteils erstrecken, um den Wasserströmungsöffnungen (205) gegenüberzuliegen.

8. Wäschebehandlungsvorrichtung nach Anspruch 7, wobei jeder der Wasserzulaufabschnitte (415) umfasst:
einen äußeren offenen Abschnitt (416), der ein Teil des Wasserzulaufabschnitts ist und zur Außenseite des Filterkörpers (410) hin offen ist, wobei der äußere offene Abschnitt (416) einen ersten Durchmesser (D1) aufweist; und
einen inneren offenen Abschnitt (417), der integral mit dem äußeren offenen Abschnitt (416) ausgebildet und mit diesem verbunden ist und zur Innenseite des Filterkörpers (410) hin offen ist, wobei der innere offene Abschnitt (417) einen zweiten Durchmesser (D2) aufweist, der kleiner ist als der erste Durchmesser (D1).

9. Wäschebehandlungsvorrichtung nach Anspruch 8, wobei ein Ende (238) des Blatts (230), das an dem einen Ende (208) des Säulenteils (200) angeordnet ist, von einem gegenüberliegenden Ende (239) des Blatts (230), das am gegenüberliegenden Ende (209) des Säulenteils (200) angeordnet ist, in einer ersten Richtung entlang eines Umfangs des Säulenteils (200) beabstandet ist,
wobei der äußere offene Abschnitt (416) in der ersten Richtung von dem inneren offenen Abschnitt (417) beabstandet ist.

10. Wäschebehandlungsvorrichtung nach Anspruch 1, wobei der Filterkörper (410) umfasst:
ein Filtergehäuse (420), das die Filterfläche (412) umfasst und einen darin ausgebildeten Raum aufweist, wobei das Filtergehäuse (420) das Aussehen des Filterkörpers (410) definiert; und
einen Innenfilter (430), der innerhalb des Filtergehäuses (420) angeordnet ist, um Fremdkörper aus in das Filtergehäuse (420) fließendem Wasser herauszufiltern.

11. Wäschebehandlungsvorrichtung nach Anspruch 10, wobei der Innenfilter (430) umfasst:
eine Mehrzahl von inneren Filterflächen (435), die entlang einer Längsrichtung des Filterkörpers (410) voneinander beabstandet sind, um Fremdkörper herauszufiltern, wenn Wasser durch sie hindurchfließt.

12. Wäschebehandlungsvorrichtung nach Anspruch 11, wobei die eine Oberfläche der Trommel (30) einer Oberseite der Trommel (30) entspricht und die gegenüberliegende Oberfläche der Trommel (30) einer Unterseite der Trommel (30) entspricht,
wobei die inneren Filterflächen (435) eine konische Form mit einem Durchmesser aufweisen, der sich verringert, wenn sich die inneren Filterflächen (435) zur gegenüberliegenden Fläche der Trommel (30) hin erstrecken.

13. Wäschebehandlungsvorrichtung nach Anspruch 11, wobei die Filterfläche (412) mit Löchern versehen ist, die Wasser durchlassen, wobei die Löcher größer sind als die in den inneren Filterflächen (435) ausgebildeten Löcher, um Wasser durchzulassen.

14. Wäschebehandlungsvorrichtung nach Anspruch 11, wobei der Innenfilter (430) ferner umfasst:
einen Innenrahmen (437), der sich entlang einer Längsrichtung des Filtergehäuses (420) erstreckt,
wobei die inneren Filterflächen (435) voneinander beabstandet und an dem Innenrahmen (437) befestigt sind.

15. Wäschebehandlungsvorrichtung nach Anspruch 14, wobei der Innenfilter (437) so angeordnet ist, dass er von dem Filtergehäuse (420) abnehmbar ist.

16. Wäschebehandlungsvorrichtung nach Anspruch 14, wobei das Filtergehäuse (420) eine offene Fläche aufweist, die der Trommelöffnung (32) zugewandt ist,
wobei der Innenfilter (430) durch die eine offene Fläche des Filtergehäuses (420) entfernbar in das Filtergehäuse (420) eingesetzt ist.

17. Wäschebehandlungsvorrichtung nach Anspruch 16, wobei das Filterbefestigungsteil (450) mit dem Filtergehäuse (420) verbunden und an der einen offenen Fläche des Filtergehäuses (4020) angeordnet ist.

18. Wäschebehandlungsvorrichtung nach Anspruch 17, wobei der Innenrahmen (437) an einem Ende, das dem Filterbefestigungsteil (450) zugewandt ist, mit einer inneren Stütze (439) versehen ist, wobei die innere Stütze (439) das Filterbefestigungsteil (450) berührt,
wobei das Filterbefestigungsteil (450) mit dem Filtergehäuse (420) verbunden ist, um die innere Stütze (439) zu berühren und den Innenrahmen (437) im Inneren des Filtergehäuses (420) zu befestigen.

## Revendications

1. Appareil de traitement du linge (1) comprenant:
une armoire (10);
une cuve (20) disposée à l'intérieur de l'armoire servant à contenir l'eau;
un tambour (30) monté en rotation à l'intérieur de la cuve pour recevoir le linge, le tambour comportant une ouverture de tambour (32) formée dans l'une de ses faces permettant l'introduction du linge;
une partie colonne (200) faisant saillie depuis une face du tambour (30) en regard de la surface tournée vers l'ouverture (32) du tambour, la partie colonne (200) comportant un espace formé en son sein; et
un filtre (400) disposé à l'intérieur de la partie colonne (200) afin de retenir les corps étrangers présents dans l'eau s'écoulant dans la partie colonne,
dans lequel la partie colonne (200) comprend:
un corps de colonne (210) comportant un espace, le corps de colonne (210) comprenant une surface d'ouverture tournée vers l'ouverture (32) du tambour;
un capuchon de colonne (220) relié au corps de colonne (210) afin de protéger la surface ouverte; et
une partie de raccordement de filtre (204) disposée sur une surface circonférentielle interne (202) de la partie colonne (200) et espacée du capuchon de colonne (220) dans le sens longitudinal du corps de colonne (210), et
dans lequel le filtre (400) comprend:
un corps de filtre (410) s'étendant parallèlement à la partie colonne (200), le corps de filtre (410) comportant une surface de filtre (412) tournée vers la surface circonférentielle intérieure (202) de la partie colonne (200); et
un élément de fixation de filtre (450) disposé à l'extrémité supérieure du corps de filtre (410) et relié à la partie de raccordement de filtre (204) afin de fixer le corps de filtre (410) à l'intérieur de la partie colonne (200).

2. Appareil de traitement du linge selon la revendication 1, dans lequel l'extrémité supérieure du corps de filtre (410) est tournée vers le capuchon de colonne (220), de sorte que la partie de fixation de filtre (450) soit tournée vers le capuchon de colonne (220).

3. Appareil de traitement du linge selon la revendication 1, dans lequel la partie colonne (200) comprend:
une ailette (230) faisant saillie d'une surface circonférentielle extérieure (201) de la partie colonne afin de créer un courant d'eau à l'intérieur du tambour (30); et
un orifice d'écoulement d'eau (205) s'étendant de la surface circonférentielle extérieure (201) de la partie colonne jusqu'à la surface circonférentielle intérieure (202) de la partie colonne, de manière à traverser celle-ci et à permettre à l'eau de s'écouler à travers.

4. Appareil de traitement du linge selon la revendication 3, dans lequel l'ailette (230) s'étend depuis une extrémité (208) de la partie colonne (200) vers l'extrémité opposée (209) de la partie colonne,
dans lequel l'orifice d'écoulement d'eau comprend une pluralité d'orifices d'écoulement d'eau (205) ménagés le long de la direction d'extension de l'ailette (230).

5. Appareil de traitement du linge selon la revendication 4, dans lequel la pluralité des orifices d'écoulement d'eau (205) sont ménagés respectivement sur les côtés opposés de l'ailette (230) par rapport à la direction circonférentielle de la partie colonne (200).

6. Appareil de traitement du linge selon la revendication 4, dans lequel le corps de filtre (410) comprend:
une pluralité de sections d'arrivée d'eau (415) disposées à l'intérieur de la partie colonne (200) de manière à faire face aux orifices d'écoulement d'eau (205),
dans lequel la surface de filtre (412) est disposée entre les sections d'arrivée d'eau (415).

7. Dispositif de traitement du linge selon la revendication 6, dans lequel l'ailette (230) s'étend selon une inclinaison par rapport à la direction longitudinale de la partie colonne (200),
dans lequel au moins certains des orifices d'écoulement d'eau (205) sont disposés parallèlement à la direction d'extension de l'ailette (230),
dans lequel les sections d'arrivée d'eau (415) s'étendent parallèlement à la direction d'agencement des orifices d'écoulement d'eau (205) à l'intérieur de la partie colonne, de manière à faire face aux orifices d'écoulement d'eau (205).

8. Appareil de traitement du linge selon la revendication 7, dans lequel chacune des sections d'arrivée d'eau (415) comprend:
une partie extérieure ouverte (416) qui fait partie de la partie d'arrivée d'eau et qui est ouverte vers l'extérieur du corps de filtre (410), la partie extérieure ouverte (416) ayant un premier diamètre (D1); et
une partie ouverte intérieure (417) formée d'un seul tenant avec la partie ouverte extérieure (416) et débouche vers l'intérieur du corps de filtre (410), la partie intérieure ouverte (417) présentant un deuxième diamètre (D2) inférieur au premier diamètre (D1).

9. Appareil de traitement du linge selon la revendication 8, dans lequel une extrémité (238) de l'ailette (230) disposée à l'une extrémité (208) de la partie colonne (200) est espacée d'une extrémité opposée (239) de l'ailette (230) disposée à l'extrémité opposée (209) de la partie colonne (200) dans une première direction le long d'une circonférence de la partie colonne (200),
dans lequel la partie extérieure ouverte (416) est espacée de la partie intérieure ouverte (417) dans la première direction.

10. Appareil de traitement du linge selon la revendication 1, dans lequel le corps de filtre (410) comprend:
un boîtier de filtre (420) comprenant la surface de filtre (412) et comportant un espace formé en son sein, le boîtier de filtre (420) définissant l'aspect du corps de filtre (410); et
un filtre interne (430) placé à l'intérieur du boîtier de filtre (420) afin de retenir les impuretés présentes dans l'eau qui s'écoule dans le boîtier de filtre (420).

11. Appareil de traitement du linge selon la revendication 10, dans lequel le filtre intérieur (430) comprend:
une pluralité de surfaces de filtre intérieur (435) espacées les unes des autres dans le sens longitudinal du corps de filtre (410) afin de retenir les corps étrangers lorsque l'eau s'écoule à travers celles-ci.

12. Appareil de traitement du linge selon la revendication 11, dans lequel la face du tambour (30) correspond à la face supérieure du tambour (30), et la face opposée du tambour (30) correspond à la face inférieure du tambour (30),
dans lequel les surfaces de filtre intérieur (435) se présentent sous forme de cône dont le diamètre diminue à mesure que les surfaces de filtre interne (435) s'étendent vers la surface opposée du tambour (30).

13. Appareil de traitement du linge selon la revendication 11, dans lequel la surface de filtre (412) est pourvue d'orifices permettant le passage de l'eau, les orifices étant plus grands que les orifices formés dans les surfaces de filtre intérieur (435) pour permettre le passage de l'eau.

14. Appareil de traitement du linge selon la revendication 11, dans lequel le filtre intérieur (430) comprend en outre:
un cadre intérieur (437) s'étendant dans le sens longitudinal du boîtier de filtre (420),
dans lequel les surfaces de filtre intérieur (435) sont espacées les unes des autres et fixées au cadre interne (437).

15. Appareil de traitement du linge selon la revendication 14, dans lequel le filtre intérieur (437) est conçu pour pouvoir être démonté du boîtier de filtre (420).

16. Appareil de traitement du linge selon la revendication 14, dans lequel le boîtier du filtre (420) présente une face ouverte tournée vers l'ouverture de tambour (32),
dans lequel le filtre intérieur (430) est inséré de manière amovible dans le boîtier de filtre (420) par l'une des surfaces ouvertes du boîtier de filtre.

17. Appareil de traitement du linge selon la revendication 16, dans lequel la partie de fixation de filtre (450) est reliée au boîtier de filtre (420) et disposée sur la face ouverte du boîtier de filtre (420).

18. Appareil de traitement du linge selon la revendication 17, dans lequel le cadre intérieur (437) est muni d'un support intérieur (439) à l'une extrémité tournée vers la partie de fixation de filtre (450), le support intérieur (439) étant en contact avec la partie de fixation de filtre (450),
dans lequel la partie de fixation de filtre (450) est relié au boîtier de filtre (420) de manière à venir en contact avec le support intérieur (439) afin de fixer le cadre intérieur (437) à l'intérieur du boîtier de filtre (420).
